# EUROPEAN PATENT SPECIFICATION

(11) **EP 2 038 155 B1**
(45) Date of publication and mention of the grant of the patent: **08.12.2010**
(21) Application number: 07733496.9
(22) Date of filing: 06.07.2007
(51) Int. Cl.: B61F 5/30, B61F 5/34, B61H 13/30

(54) **RAILWAY BOGIE WITH A LOAD WEIGH VALVE**
DREHGESTELL FÜR SCHIENENFAHRZEUG, MIT EINEM LASTMESSVENTIL
BOGIE POUR VÉHICULE FERROVIAIRE, AVEC UNE VALVE DE PESÉE

(30) Priority: 11.07.2006 US 830014 P; 12.07.2006 GB 0613804
(43) Date of publication of application: 25.03.2009
(73) Proprietor: SCT Europe Limited, Kirkaldy, Fife KY1 3UF (GB)
(72) Inventor: TAYLOR, David, Fife KY12 3AR (GB)
(74) Representative: Dunlop, Brian Kenneth Charles
(86) International application number: PCT/GB2007/002555
(87) International publication number: WO 2008/007067

(56) References cited:
- EP-A1- 0 443 953
- WO-A-01/85521
- WO-A-2006/072800

## Description

This invention relates to railway bogies.

In existing railway bogies it is known to provide load weigh valves sitting atop suspension springs, such that they are positioned between the sprung mass of the bogie and wagon and the unsprung mass of the wheel set. The load weigh valve is held in a fixed location on the bogie frame, whilst the sprung mass generally moves vertically upwards and downwards in a fixed vertical z-plane. In this configuration the load weigh valve measures a proportion of the sprung mass via the spring force, which is a constant for a given load. However any vertical misalignment or horizontal relative movement in the X and Y planes between the unsprung mass and the sprung mass, for example, as a result of wheel set steering, can lead to inaccuracy in the resulting absolute amount of braking load, which is applied proportionally to the output of the load weigh valve.

From one aspect the invention consists in a wheel set, a suspension for supporting the load on the wheel set, the suspension including at least one spring mounted on the wheel set, a wedge element for location between the load and spring to accommodate changes in vertical alignment between the load and wheel set and a load weigh valve for providing an indication of the mass of the load as applied to the spring **characterised in that** the load weigh valve is mounted between the spring and the wedge element.

As the load weigh valve is now not fixed in vertical alignment, but moves with the wedge element, for example when the bogie steers in the X and Y planes, with the frame, the errors provided by the previous system either do not arise or are substantially mitigated.

Preferably the load weigh valve is mounted on the wedge element for movement therewith and conveniently the wedge element may define a chamber, for example the wedge element may be hollow, and the load weigh valve may be mounted therein.

The invention also includes a railway vehicle having at least two bogies as defined above and wherein one bogie has at least a forward inclined wedge element and the other bogie has at least a rearward inclined wedge element and the load weigh valves may be respectively on the forward and rearward inclined elements.

A vehicle may further include a computing device for computing a mean indication from the respective indications of the load valves. In this case it may additionally include a controllable braking system responsive to the mean indication.

Although the invention has been defined above it is to be understood it includes any inventive combination of the features as defined in the appended claims.

The invention may be performed in various ways and an embodiment will be described, by way of example, with reference to the accompanying drawings in which
Figure 1 is a cross-sectional view through part of one end of a bogie of a prior art arrangement; and

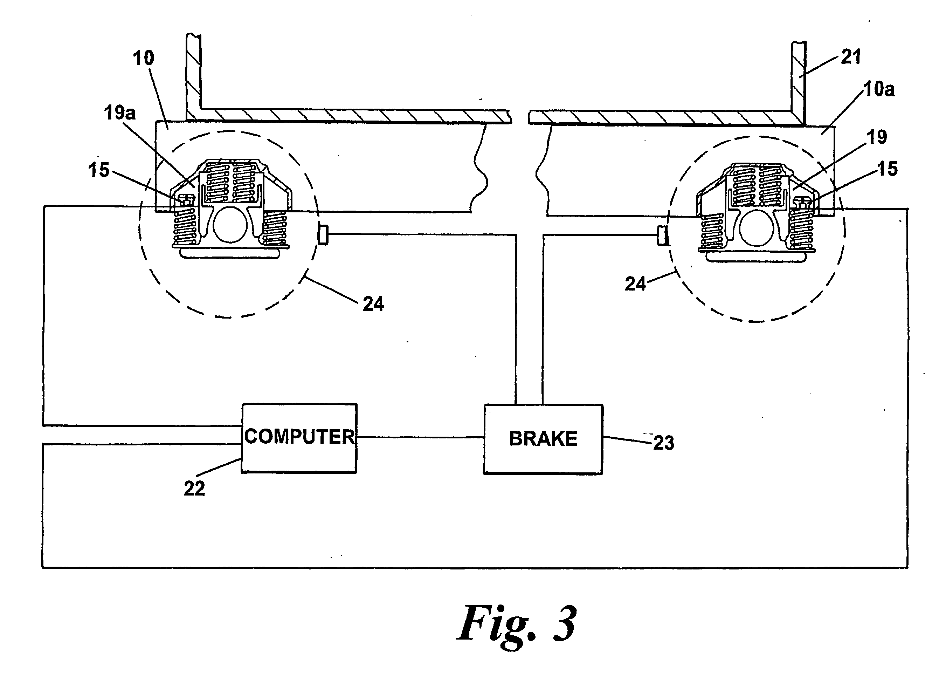

Figure 2 is an equivalent view of an embodiment of the invention; and Figure 3 is a schematic view of part of a railway vehicle having two bogies.

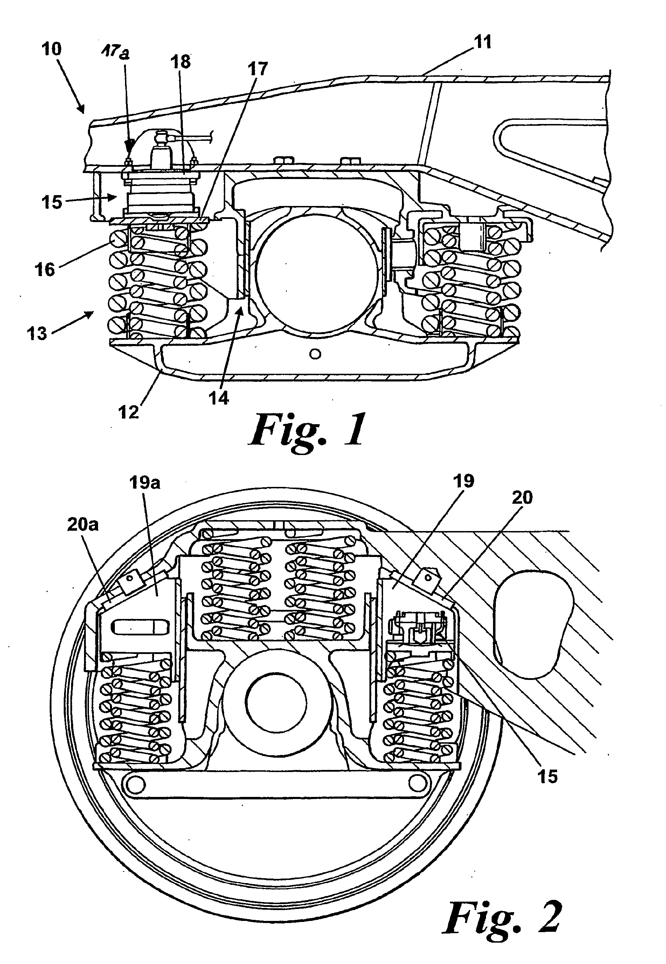

Figure 1 illustrates a known bogie suspension arrangement. The bogie, part of which is shown at 10, includes a load bearing portion 11, a wheel set portion 12 and intervening spring suspension 13. The load portion 11 and wheel set portion 12 are designed to move vertically with respect to one another, this movement being defined by inter-engaging faces, which are generally indicated at 14.

A load weigh valve 15 is fixed between the load portion 11 and a spring 16 of the suspension 13 by means of plates 17 and 18 and at the interface 17a, by means of screw fastenings.

As previously indicated this arrangement works well when there is true vertical movement, but the spring 16 may be required to tilt in the X and Y plane, for example when the bogie is cornering but with a fixed and unmovable valve, and this leads to the errors previously described.

Turning to an embodiment of the Applicant's design as shown in Figure 2, the major difference, for present purposes is that the interface 17a is replaced by a wedge element 19 which bears on an inclined friction plate 20 to allow fore and aft and lateral movement of the wheel set 12 relative to the portion 11, whilst allowing the spring to maintain its vertical orientation. It will also be noted that a corresponding rearwardly inclined wedge and friction plate combination are shown at 19a and 20a respectively.

In this arrangement the wedge element 19 can be hollow to define a chamber within it and the load weigh valve 15 is mounted in the chamber for movement with the wedge element 19, so that it continually measures the vertical load.

In practice, railway vehicles, as is schematically shown at 21, have at least two bogies 10 and 10a. In this case load weigh valve 15 may be mounted on a rearwardly inclined wedge element 19a on one bogie and on the forwardly inclined wedge element 19 on the other bogie. The outputs from these two load valves can be fed to a control device 22, which produces a mean of the two readings and uses this to generate a control output for a braking system 23, which controls the braking on the bogie wheels 24.

## Claims

1. A railway bogie including a wheel set, a suspension (13) for supporting a load on the wheel set (12), the suspension including at least one spring (16) mounted on the wheel set; a wedge element (19) located between the load and spring to accommodate changes in vertical alignment between the load and wheel set and a load weigh valve (15) for providing indication of the mass of the load as applied to the spring **characterised in that** the load weigh (15) valve is mounted between the spring (19) and wedge element (19) for movement with the wedge element.

2. A railway bogie as claimed in claim 1 wherein the load weigh valve (15) is mounted on the wedge element (19) for movement therewith.

3. A railway bogie as claimed in claim 2 wherein the wedge element (19) defines a chamber and the load weigh valve (15) is mounted therein.

4. A railway vehicle having at least two bogies as claimed in any one of the preceding claims and wherein one bogie has at least a forward-inclined wedge element (19a) and the other bogie has at least a rearward inclined wedge element (19) and; the load weigh valves (15) are respectively on the forward and rearward inclined elements.

5. A vehicle as claimed in claim 4 further including a control device (22) for providing a mean indication from the respective indications of the load weigh valves.

6. A vehicle as claimed in claim 5 including a controllable braking system (23) responsive to the mean indication.

## Patentansprüche

1. Eisenbahndrehgestell mit einem Radsatz, einer Aufhängung (13) zum Aufnehmen einer Last am Radsatz (12), wobei die Aufhängung mindestens eine am Radsatz montierte Feder (16); ein Keilelement (19), das zwischen der Last und der Feder sitzt, um Veränderungen der Vertikalausrichtung zwischen Last und Radsatz aufzunehmen, und ein Lastwiegeventil (15) zur Bereitstellung einer Angabe über die Masse der Last aufweist, die auf die Feder aufgebracht ist, **dadurch gekennzeichnet, dass** das Lastwiegeventil (15) zwischen der Feder (16) und dem Keilelement (19) angebracht ist, um sich zusammen mit dem Keilelement zu bewegen.

2. Eisenbahndrehgestell nach Anspruch 1, wobei das Lastwiegeventil (15) am Keilelement (19) angebracht ist, um sich zusammen mit diesem zu bewegen.

3. Eisenbahndrehgestell nach Anspruch 2, wobei das Keilelement (19) eine Kammer bildet und das Lastwiegeventil (15) darin angebracht ist.

4. Schienenfahrzeug mit mindestens zwei Drehgestellen nach einem der vorhergehenden Ansprüche, wobei ein Drehgestell mindestens ein nach vorne geneigtes Keilelement (19a) und das andere Drehgestell mindestens ein nach hinten geneigtes Keilelement (19) aufweist und die Lastwiegeventile (15) am nach vorne bzw. nach hinten geneigten Keilelement angeordnet sind.

5. Fahrzeug nach Anspruch 4, darüber hinaus eine Steuereinheit (22) umfassend, um aus den jeweiligen Angaben der Lastwiegeventile eine mittlere Angabe bereitzustellen.

6. Fahrzeug nach Anspruch 5, mit einem steuerbaren, auf die mittlere Angabe ansprechenden Bremssystem (23).

## Revendications

1. Bogie pour véhicule ferroviaire comprenant un essieu monté, une suspension (13) pour supporter une charge sur l'essieu monté (12), la suspension comprenant au moins un ressort (16) monté sur l'essieu monté ; un élément coin (19) disposé entre la charge et le ressort pour s'adapter à des changements d'alignement vertical entre la charge et l'essieu monté et un variateur de pesage de charge (15) pour fournir une indication de la masse de la charge qui est appliquée sur le ressort, **caractérisé par le fait que** le variateur de pesage de charge (15) est monté entre le ressort (16) et l'élément coin (19) pour un déplacement avec l'élément coin.

2. Bogie pour véhicule ferroviaire selon la revendication 1, dans lequel le variateur de pesage de charge (15) est monté sur l'élément coin (19) pour un déplacement avec celui-ci.

3. Bogie pour véhicule ferroviaire selon la revendication 2, dans lequel l'élément coin (19) définit une chambre et le variateur de pesage de charge (15) est monté dans celle-ci.

4. Véhicule ferroviaire ayant au moins deux bogies tels que définis à l'une quelconque des revendications précédentes, et dans lequel un bogie a au moins un élément coin incliné vers l'avant (19a) et l'autre bogie a au moins un élément coin incliné vers l'arrière (19b) et ; les variateurs de pesage de charge (15) sont sur les éléments inclinés respectivement vers l'avant et vers l'arrière.

5. Véhicule selon la revendication 4, comprenant en outre un dispositif de commande (22) pour fournir une indication moyenne à partir des indications respectives des variateurs de pesage de charge.

6. Véhicule selon la revendication 5, comprenant un système de freinage commandable (23) réagissant à l'indication moyenne.
